# EUROPÄISCHE PATENTSCHRIFT

(11) **EP 3 565 974 B1**
(45) Veröffentlichungstag und Bekanntmachung des Hinweises auf die Patenterteilung: **28.04.2021**
(21) Anmeldenummer: 18713123.0
(22) Anmeldetag: 14.03.2018
(51) Int. Cl.: F04D 29/36, F16L 27/08

(54) **HYDRAULISCHE DREHDURCHFÜHRUNG**
HYDRAULIC ROTARY FEED-THROUGH
PASSAGE TOURNANT HYDRAULIQUE

(30) Priorität: 17.03.2017 DE 102017105776; 13.07.2017 DE 202017104188 U
(43) Veröffentlichungstag der Anmeldung: 13.11.2019
(73) Patentinhaber: IE ASSETS GMBH & CO. KG, 73614 Schorndorf (DE)
(72) Erfinder: ERHARDT, Steffen, 73650 Winterbach (DE); HÄGELE, Karl, 73614 Schorndorf (DE); LECHLER, Markus, 73614 Schorndorf (DE)
(74) Vertreter: Müller, Gottfried
(86) Internationale Anmeldenummer: PCT/DE2018/100227
(87) Internationale Veröffentlichungsnummer: WO 2018/166564

(56) Entgegenhaltungen:
- DE-A1- 19 903 565
- DE-A1-102013 014 033
- US-A- 4 899 641

## Beschreibung

Die Erfindung betrifft eine hydraulische Drehdurchführung mit zentraler Drehachse.

Hydraulische Drehdurchführungen sind unter anderem, wie auch in der DE 10 2013 014 033 B4 dargelegt, bei Lüfterrädern eingesetzt, die drehbar angetrieben sind und zu ihrer Nabe radial abstehende Lüfterflügel aufweisen. Die Lüfterflügel sind bei entsprechender Versorgung des Lüfterrades über die lagefest drehbar gehaltene hydraulische Drehdurchführung nicht nur zur Veränderung der Fördermenge in ihrem Anstellwinkel zur Drehebene des Lüfterrades verstellbar, sondern auch, unter Beibehalt der Drehrichtung des Lüfterrades, durch Umschwenken über die Drehebene des Lüfterrades in ihrer Förderrichtung umstellbar.

Solche Lüfterräder erreichen häufig, entsprechend den geforderten Lüfterleistungen, beträchtliche Ausmaße und bedingen damit auch viele und lange Dichtgrenzen mit der Gefahr entsprechender Leckagen, denen durch entsprechende bautechnische Maßnahmen zu begegnen ist.

Durch die DE 199 03 565 A1 ist eine hydraulische Drehdurchführung bekannt, die bezogen auf ihre jeweils geforderten Funktionen ein minimiertes Bauvolumen ermöglicht und bei der durch den Verlauf von Druckleitung und Sammelleitung im Drehhals der Drehdurchführung als quasi gemeinsamen Versorgungskanal der Drehdurchführung auch die Anzahl und Länge kritischer Dichtgrenzen verringert wird.

Trotz der Minimierung des Bauvolumens und reduzierter Dichtgrenzen durch den Verlauf von Druckleitung und Sammelleitung im Drehhals sollen gute Voraussetzungen für die Zusammensetzung und Montage solcher Drehdurchführungen erfindungsgemäß durch die zum Drehhals umschließende Lageranordnung und Dichtungsanordnung in axial aufeinander sich abstützenden Fassungen erreicht werden, womit insbesondere auch für klein bauende hydraulische Drehdurchführungen in günstiger Weise eine justierte Führung der Lageranordnung und der Dichtungsanordnung im aufnehmenden Gehäuse geschaffen ist, die auch in Verbindung mit einem Keilriementrieb vorteilhaft einzusetzen sind, dessen Riemenscheiben als Arbeitselemente zur Veränderung des Übersetzungsverhältnisses axial gegeneinander verstellt werden.

Die Verbindung von Lageranordnung und Dichtungsanordnung zu einer Montageeinheit in wechselseitiger Abstützung und bei gemeinsamer Führung im aufnehmenden Gehäuse macht es in vorteilhafter Weise - quasi als Nebeneffekt - auch möglich, den Drehhals als Drehachse für ein Zusatz- oder Arbeitsgerät zu nutzen, das über die Drehdurchführung mit einem Druckmedium zu versorgen und/oder zu beaufschlagen ist.

Die Erfindung ist insbesondere auch in Verbindung mit Lüfterrädern vorteilhaft einsetzbar, bei denen die Lüfterflügel bezüglich ihres Anstellwinkels entgegen der Windkraft durch Druckbeaufschlagung verstellt werden müssen, also hydraulisch nur in eine Drehrichtung durch Druckbeaufschlagung verstellt werden müssen.

In der Praxis kann die Drehdurchführung über die umschließenden Lager und/oder Dichtungen drehbar und direkt zum aufnehmenden Gehäuse abgestützt verbunden sein, so dass die Drehdurchführung mit dem aufnehmenden Gehäuse auch das Gegenstück zu einer Kolbeneinheit bilden kann, die zum aufnehmenden Gehäuse einen über die Drehdurchführung zu versorgenden Arbeitsraum abgrenzt. Vorteilhaft ist es aber im Rahmen der Erfindung auch, die Drehdurchführung als solche als eigenständige Baueinheit im Sinne einer Einsatzpatrone auszubilden, die entsprechend dem jeweiligen Erfindungszweck in ein aufnehmendes Gehäuse einzustecken ist.

Diese Ausgestaltung der Erfindung ermöglicht bautechnisch sehr schlanke Lösungen, bei denen der Durchmesser des zentralen Drehhalses im Bereich des/der umschließenden Lager(s) etwa einem Drittel des Lagerdurchmessers entspricht - bezogen auf einen Kreisquerschnitt der als Einsatzpatrone ausgeführten Drehdurchführung.

Weitere Einzelheiten und Merkmale der Erfindung ergeben sich aus den Ansprüchen und der nachfolgenden Zeichnungsbeschreibung, die in
- Fig. 1: stark schematisiert einen Keilriementrieb veranschaulicht, in
- Fig. 2: eine stirnseitige Ansicht zu Fig. 1 gemäß dem Pfeil II in Fig. 1, in
- Fig. 3: einen Schnitt durch den Keilriementrieb gemäß Fig. 1 entsprechend der Schnittführung III-III in Fig. 2, und in
- Fig. 4: einen vergrößerten, vereinfachten Ausschnitt IV von Fig. 3 durch die in der getriebenen Scheibe des Keilriementriebes zentral aufgenommene hydraulische Drehdurchführung zeigt.
- Fig. 5: zeigt den Einsatz einer erfindungsgemäßen Drehdurchführung bei einem Lüfterrad mit zu dessen Nabe radial angeordneten, in ihrem Anstellwinkel über eine hydraulische Stellvorrichtung einstellbaren Lüfterflügeln, wobei die Stellvorrichtung über die Drehdurchführung versorgt in der Nabe des Lüfterrades angeordnet ist.

Zum besseren Verständnis von Funktion und möglichem Aufbau hydraulischer Drehdurchführungen wird eine solche Drehdurchführung 1 zunächst in einer erfindungsgemäßen Ausgestaltung als Bestandteil eines fluidisch, insbesondere hydraulisch verstellbaren Keilriementriebes 6 (Riemenscheibentrieb) nachstehend erläutert.

Der gezeigte Keilriementrieb 6 als Arbeitseinheit weist eine zu einer Antriebswelle 4, beispielsweise einer Motorwelle, drehfest und koaxial (Drehachse 5) liegende, treibende Scheibe 2 auf, zu der drehfest, aber axial verschiebbar gleichachsig eine getriebene Scheibe 3 einen Keilspalt 7 begrenzend gegenüberliegt. Treibende Scheibe 2 und getriebene Scheibe 3 bilden ein Keilscheibenpaar 13, in dessen Keilspalt 7 ein hier nicht gezeigter Keilriemen läuft, über den die Antriebsverbindung zwischen dem gezeigten, durch die Scheiben 2 und 3 veranschaulichten Keilscheibenpaar 13 und einem korrespondierenden Keilscheibenpaar hergestellt wird, und zwar im Übersetzungsverhältnis veränderbar durch gegensinnige axiale Verstellung der Scheiben der Keilscheibenpaare und dadurch bedingte Veränderungen der Stützradien des Keilriemens zu den tellerförmigen Scheiben unter Aufrechterhaltung der Spannung des Keilriemens.

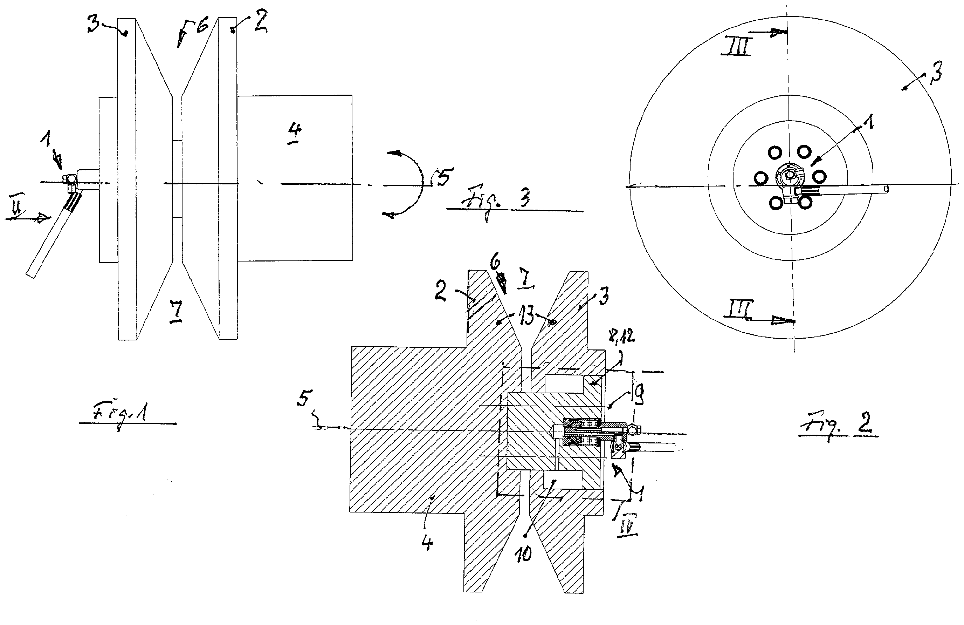

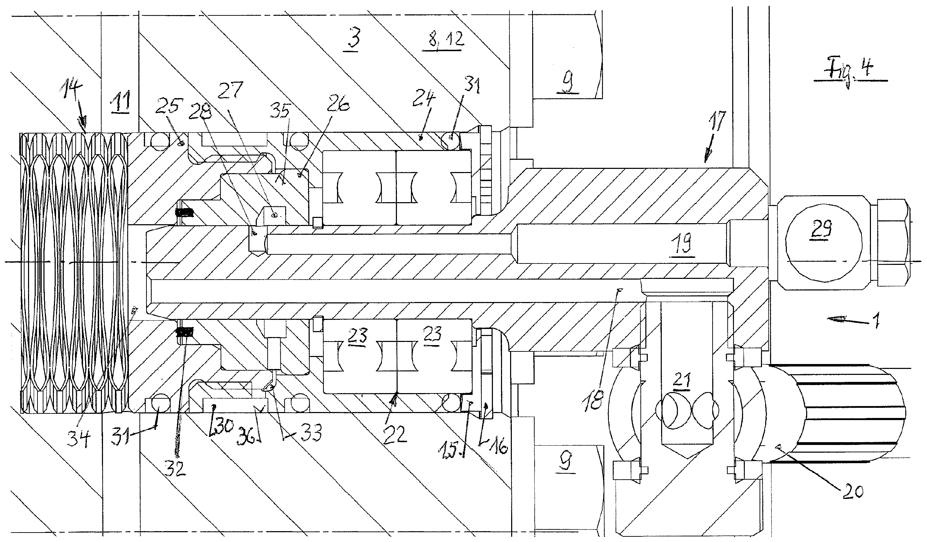

Drehfest und koaxial verbunden sind, wie in Fig. 3 gezeigt, die treibende Scheibe 2 und getriebene Scheibe 3 über eine zentrale Führungshülse 8, die die getriebene Scheibe 3 trägt und auf der diese drehfest und axial verschiebbar geführt ist. Die Führungshülse 8 ihrerseits ist einlaufend in die treibende Scheibe 2 zu dieser zentrierend aufgenommen und über axiale Spannelemente 9, insbesondere Spannschrauben, fixiert. Die Spannelemente 9 durchsetzen die Führungshülse 8 koaxial zur Drehachse 5 und sind in der treibenden Scheibe 2 zur Antriebswelle 4 fixiert. Umschließend zur Führungshülse 8 und drehfest zu dieser liegt die axial verstellbare, getriebene Scheibe 3, die zur Führungshülse 8 einen Ringraum 10 abgrenzt. Der Ringraum 10 ist über Leitungsverbindungen 11, wie aus Fig. 4 ersichtlich, an die Drehdurchführung 1 angeschlossen und wird entsprechend dem jeweils gewünschten Übersetzungsverhältnis zur Einstellung der Axiallage der getriebenen Scheibe 3 gegen die treibende Scheibe 2 hydraulisch beaufschlagt.

Die Drehdurchführung 1 ist zentral, also koaxial zur Führungshülse 8 angeordnet, wobei die Führungshülse 8 auch ein Gehäuse 12 für die Drehdurchführung 1 bildet und den Aufnahmeraum 34 für diese begrenzt. In diesem durch die Führungshülse 8 begrenzten Aufnahmeraum 34 ist die Drehdurchführung 1 als Baueinheit in Form einer Patrone axial verspannt und umfangsseitig dichtend (Dichtungen 31) eingesetzt. Die axial verspannte Fixierung kann beispielsweise über ein Federpaket 14 erfolgen, das bodenseitig zum Aufnahmeraum 34 angeordnet ist. Dies axial gegenüberliegend zu einer scheibenförmigen Abdeckung 15 des Aufnahmeraumes 34, die zur Erleichterung der Montage bevorzugt als geteilte Scheibe ausgebildet ist und die über einen Spannring 16 gegen das Gehäuse 12, das durch einen Teil der Führungshülse 8 gebildet ist, abgestützt ist.

Die im Aufnahmeraum 34 des Gehäuses 12 aufgenommene Drehdurchführung 1 weist einen zum Gehäuse 12 lagefest drehbar gehaltenen Drehhals 17 auf, in dem axial eine Druckleitung 18 und eine Sammel- und/oder Leckageleitung 19 verlaufen. Beide liegen radial versetzt zu der Drehachse 5, verlaufen aber parallel zu dieser. Die Druckleitung 18 wird über einen Druckanschluss 20 gespeist, der als Drehanschluss ausgebildet ist und über eine Querbohrung 21 an die Druckleitung 18 angeschlossen ist. Diese ist axial gegenüberliegend zum Anschluss 20 über die Leitungsverbindung 11 mit dem Ringraum 10 verbunden.

Im Aufnahmeraum 34 ist die Drehdurchführung 1 mit ihrem Drehhals 17 axial angrenzend an die Spannebene der Spannelemente 9 zur Oberseite der Führungshülse 8 über eine Lageranordnung 22 abgestützt und gehalten, die zwei axial aufeinander abgestützte und in einer Fassung 24 aufgenommene Lager 23 aufweist. Die Fassung 24 der Lageranordnung 22 ist axial verklammert zu einer Fassung 25 einer zum Drehhals 17 umschließenden Dichtungsanordnung 26 gehalten. In dieser Dichtungsanordnung 26 ist ein Leckagesammelraum 27 ausgebildet, der zum Drehhals 17 hin im Überdeckungsbereich zu einem Überströmquerschnitt 28 auf die Sammel-/Leckageleitung 19 im Drehhals 17 liegt. Die Sammel-/Leckageleitung 19 erstreckt sich ausgehend vom Überströmquerschnitt 28 zu einem Anschluss 29, der im Weiteren eine Rückführung eventueller Leckagen ermöglicht oder, als bevorzugte Lösung, auch die Anordnung einer Leckagen erfassenden Sensorik, eventuell auch einer optischen Anzeige im Sinne eines Schauglases.

Diese letztere Gestaltung ist besonders nutzerfreundlich, unempfindlich sowie praxisbezogen und ermöglicht insbesondere die Verbindung zum Schauglas über eine rüsselartige, flexible und bevorzugt auch transparente Leitung, um Leckageabweichungen vom Regel-Betrieb unschwer und quasi beiläufig erkennen zu lassen. Eine solche, insbesondere rüsselartige Leitung, kurz also ein solcher Leckage-Rüssel, ermöglicht besonders vielfältige Positionierungen des Schauglases. Insbesondere in Verbindung mit längeren Leitungswegen kann es auch zweckmäßig sein, dem Schauglas eine leicht saugende, die Abdichtung praktisch nicht beeinträchtigende Entlüftung zuzuordnen.

Die Fassungen 24 und 25, die gemeinsam einen Ringraum 35 für die Aufnahme der Dichtungsanordnung 26 gegen den Drehhals 17 abgrenzen, bilden in ihrem Überlagerungsbereich, in dem sie gegeneinander axial verkrallt sind, auch Begrenzungen für zumindest eine gegen die Wandung 36 des Aufnahmeraumes 34 radial offene Fangtasche 30, die zumindest eine Anschlussverbindung 33 zum Leckagesammelraum 27 aufweist, so dass über umfangsseitig zu den Fassungen 24 und 25 angeordnete Dichtungen 31 erfolgende Leckagen ebenfalls erfasst und der Sammel-/Leckageleitung 19 zugeführt werden.

Zudem ist es bei der erfindungsgemäßen Ausgestaltung und Verwendung der Drehdurchführung 1 möglich, Dichtspalte zwischen gegeneinander bewegten Teilen so weit zu reduzieren, also so klein zu halten, dass eventuelle für Leckagen relevante Spalte im Bereich der Drehdurchführung 1 gegenüber der Führungshülse 8 praktisch ohne Bedeutung, insbesondere ohne fühlbare und sichtbare Effekte, bleiben.

Die Dichtungsanordnung 26 umfasst bevorzugt des Weiteren eine Ringdichtung 32, die im radialen Ringspalt zwischen dem Drehhals 17 und die Dichtung 26 aufnehmender Fassung 35 liegt und eine Absicherung gegen Kurzschlussverbindungen zwischen dem Auslauf der Druckleitung 18 und dem hierzu axial versetzten Überströmquerschnitt 28 auf die Sammel-/Leckageleitung 19 bildet.

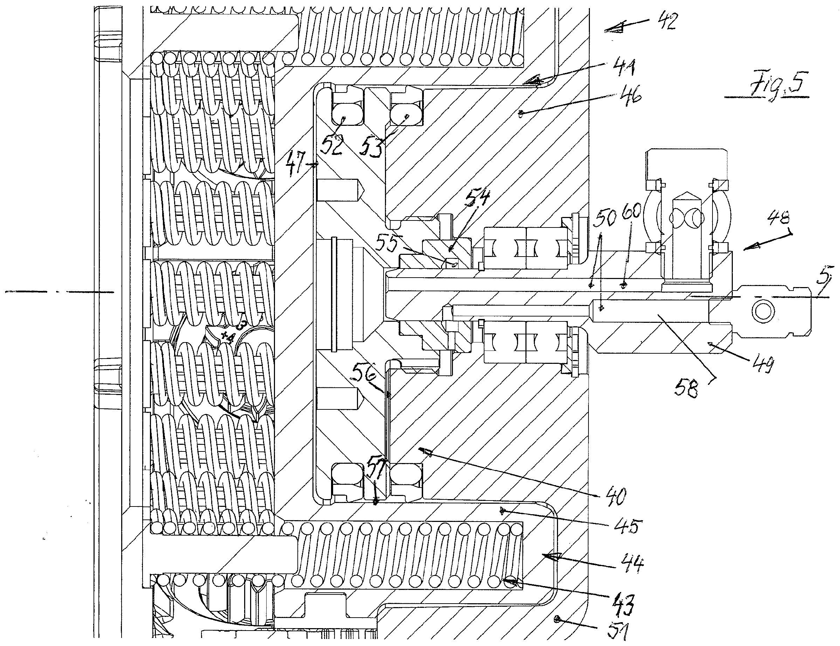

Der Einsatz einer erfindungsgemäßen Drehdurchführung 48 in einer Arbeitseinheit mit gegeneinander zu verstellenden Arbeitselementen wird in Verbindung mit Fig. 5 bezogen auf Bauformen von im Markt unter der Bezeichnung CLEANFIX^{R} befindlichen und eingangs auch angesprochenen Lüfterrädern nachstehend erläutert. Kennzeichen dieser Bauformen sind eine zentrale Nabe 42, zur Nabe 42 radiale, in ihrem Anstellwinkel einstellbare, in Fig. 5 nicht gezeigte Lüfterflügel als Arbeitselemente und eine in der Nabe 42 aufgenommene hydraulische Stellvorrichtung 40 für die Lüfterflügel. Diese Stellvorrichtung 40 bedingt eine relativ zur drehbaren Nabe 42 ihrerseits drehbare hydraulische Drehdurchführung 48.

Die Stellvorrichtung 40 umfasst einen in einem zentralen Aufnahmeraum 41 der Nabe 42 axial verschieblichen und durch hydraulische Beaufschlagung gegen Federkraft (Federn 43) verstellbaren Stellkolben 44, der bei napfförmiger Ausbildung mit seiner Napfwand 45 axial übergreifend zu einem Dom 46 liegt und bodenseitig zum Dom 46 den für die Verstellung der zur Nabe 42 radialen Lüfterflügel hydraulisch zu beaufschlagenden Arbeitsraum 47 abgrenzt.

Die Drehdurchführung 48 weist analog zum Ausführungsbeispiel gemäß Fig. 4, auf das wegen weiterer dort gezeigter und beschriebener Details ausdrücklich verwiesen wird, einen drehfest gehaltenen Drehhals 49 und durch den Drehhals 49 verlaufende Versorgungsleitungen 50 in Form einer Druckleitung 59 und einer Sammel-/Leckageleitung 58 auf, so dass sich diverse Dichtgrenzen ergeben, einmal axial zwischen dem Dom 46 und der Napfwand 45 des Stellkolbens 44 und zum anderen zwischen dem drehfest angeordneten Drehhals 49 und dem relativ zum Drehhals 49 drehbaren, vom Drehhals 49 durchsetzten und zum Drehhals 49 umschließenden Gehäuse 51.

Diese Dichtgrenzen sind, entsprechend den Erläuterungen zu Fig. 4, einerseits durch axial beanstandete Dichtungen 52, 53 zwischen der Umfangswand des Domes 46 und der ringförmigen Napfwand 45 des Stellkolbens 44 gebildet, und andererseits durch die Dichtung 54 zwischen dem Dom 46 und dem zum Dom 46 drehbar gelagerten Drehhals 49 der Drehdurchführung 48. Die zum Drehhals 49 umschließende Dichtung 54 grenzt gegenüber dem Drehhals 49, analog zu Fig. 4, einen Leckagesammelraum 55 ab und dieser Leckagesammelraum 55 steht über mindestens einen Verbindungskanal 56 mit einem Übergangsraum 57 zwischen den Dichtungen 52 und 53 in Verbindung, so dass seitens der Dichtungen 52, 53 abgefangene Leckagen ebenso wie entlang der Ringdichtung 54 zum feststehenden Drehhals 49 auftretende Leckagen der Leckagesammelleitung 58 zugeführt und über diese abgeführt werden können. Die konstruktive Ausbildung des Domes 46 mit zwischen den Dichtungen 52 und 53 liegender Trennebene zu axial aufeinander folgenden Abschnitten des Domes 46 ist bezogen auf die Dichtungsanordnungen und die Gestaltung der Verbindungswege zum Leckagesammelraum 55 vorteilhaft.

Insgesamt veranschaulicht Fig. 5 eine vorteilhafte Weiterbildung der an sich bekannten CLEANFIX^{R} Lüfterräder in Bezug auf eine weitgehendst leckagefreie Gestaltung von Arbeitseinheiten, zu denen neben den angesprochenen Lüfterrädern und Keilriementrieben u. a. auch als Beispiele Werkzeugmaschinen zu nennen sind, bei denen spindelseitige Spannvorrichtungen zu versorgen oder Zuführungen für Kühl- und/oder Schmiermittel vorgesehen sind.

## Patentansprüche

1. Hydraulische Drehdurchführung mit zentraler Drehachse (5), mit zentrisch über eine Lageranordnung (22) in einem aufnehmenden Gehäuse (12, 51) drehbar geführtem Drehhals (17, 59), mit im Drehhals (17, 49) verlaufender Druckleitung (18, 59), die ausgehend von einem Druckanschluss (20) an einer Stirnseite des Gehäuses (12, 51) auf eine gegenüberliegende Druckseite der Drehdurchführung (1, 48) ausmündet, und mit axial zwischen der Druckseite der Drehdurchführung (1, 48) und der Lageranordnung (22) liegender, den Drehhals (17, 49) umschließender Dichtungsanordnung (26, 54), die gegen den Drehhals (17, 49) einen Leckagesammelraum (27, 55) abgrenzt, der an eine Sammelleitung (19, 58) angeschlossen ist, die im Drehhals (17, 49), vom Sammelraum (27, 55) ausgehend, zu der Stirnseite des Gehäuses (12, 51) verläuft, die der Druckseite gegenüberliegt, wobei die Druckleitung (18, 59) und die Sammelleitung (19, 58) im Drehhals (17, 49) parallel verlaufend durch Bohrungen im Drehhals (17, 49) gebildet sind, **dadurch gekennzeichnet,**
**dass** die Lageranordnung (22) und die Dichtungsanordnung (26) in axial aufeinander abgestützten Fassungen (24, 25) aufgenommen sind.

2. Hydraulische Drehdurchführung nach Anspruch 1,
**dadurch gekennzeichnet,**
**dass** die Fassungen (24, 25) einander axial übergreifend zu einer Einheit verbunden sind.

3. Hydraulische Drehdurchführung nach Anspruch 1 oder 2,
**dadurch gekennzeichnet,**
**dass** die Fassungen (24, 25) über umfangsseitige Dichtungen (31) im aufnehmenden Gehäuse (12) der Drehdurchführung (1) angeordnet sind.

4. Hydraulische Drehdurchführung nach einem der vorhergehenden Ansprüche,
**dadurch gekennzeichnet,**
**dass** die Drehdurchführung (1) als Einsatzpatrone ausgebildet ist.

5. Hydraulische Drehdurchführung nach Anspruch 3 oder 4,
**dadurch gekennzeichnet,**
**dass** die Dichtungsanordnung (26) über ein druckseitig angeordnetes Federpaket gegen die Lageranordnung (22) verspannt ist.

6. Hydraulische Drehdurchführung nach einem der vorhergehenden Ansprüche,
**dadurch gekennzeichnet,**
**dass** die Drehdurchführung (1) Bestandteil einer Arbeitseinheit mit gegeneinander verstellbaren Arbeitselementen ist.

7. Hydraulische Drehdurchführung nach Anspruch 6,
**dadurch gekennzeichnet,**
**dass** als Arbeitseinheit ein Riemenscheibentrieb (6) vorgesehen ist, dessen gegeneinander verstellbare Arbeitselemente durch Riemenscheiben (2, 3) gebildet sind und dessen eine der hydraulisch axial gegeneinander verstellbaren Riemenscheiben (2, 3) das aufnehmende Gehäuse (12) für die Drehdurchführung (1) bildet.

8. Hydraulische Drehdurchführung nach Anspruch 6,
**dadurch gekennzeichnet,**
**dass** die Arbeitseinheit durch ein Lüfterrad mit zentraler Nabe (42), zentral in der Nabe (42) aufgenommener Drehdurchführung (48) und zur Nabe (42) radialen, in ihrem Anstellwinkel einstellbaren Lüfterflügeln gebildet ist, bei der als gegeneinander verstellbare Arbeitselemente das Nabengehäuse (51) als Aufnahme für einen hydraulisch axial beaufschlagten Stellkolben (44) und der in Wirkverbindung zu den Lüfterflügeln stehende Stellkolben (44) vorgesehen sind.

9. Hydraulische Drehdurchführung nach Anspruch 8,
**dadurch gekennzeichnet,**
**dass** das Nabengehäuse (51) als napfförmige Aufnahme für den Stellkolben (44) ausgebildet ist, der zum Drehhals (49) und zur Napfwand (45) Dichtungsanordnungen (52) aufweist.

10. Hydraulische Drehdurchführung nach Anspruch 6,
**dadurch gekennzeichnet,**
**dass** die Drehdurchführung (1) im Anschluss an ein drehbar angetriebenes Arbeitselement, insbesondere ein drehbares Arbeitswerkzeug vorgesehen ist.

## Claims

1. Hydraulic rotary leadthrough having a central axis of rotation (5), having a rotary neck (17, 59) which is guided centrally via a bearing arrangement (22) so as to be rotatable in a receiving housing (12, 51), having a pressure line (18, 59) which extends in the rotary neck (17, 49) and which, starting from a pressure connection (20) at an end side of the housing (12, 51), opens out onto an opposite pressure side of the rotary leadthrough (1, 48), and having a sealing arrangement (26, 54) which is situated axially between the pressure side of the rotary leadthrough (1, 48) and the bearing arrangement (22), encloses the rotary neck (17, 49) and, with respect to the rotary neck (17, 49), delimits a leakage collecting space (27, 55) which is connected to a collecting line (19, 58) which extends in the rotary neck (17, 49) starting from the connecting space (27, 55) to the end side of the housing (12, 51) that is opposite the pressure side, wherein the pressure line (18, 59) and the collecting line (19, 58) are formed by bores in the rotary neck (17, 49) so as to extend parallel in the rotary neck (17, 49), **characterized**
**in that** the bearing arrangement (22) and the sealing arrangement (26) are received in mounts (24, 25) which are axially supported on one another.

2. Hydraulic rotary leadthrough according to Claim 1, **characterized**
**in that** the mounts (24, 25) are connected to form a unit while engaging axially over one another.

3. Hydraulic rotary leadthrough according to Claim 1 or 2,
**characterized**
**in that** the mounts (24, 25) are arranged in the receiving housing (12) of the rotary leadthrough (1) via circumferential seals (31).

4. Hydraulic rotary leadthrough according to one of the preceding claims,
**characterized**
**in that** the rotary leadthrough (1) is configured as an insert cartridge.

5. Hydraulic rotary leadthrough according to Claim 3 or 4,
**characterized**
**in that** the sealing arrangement (26) is braced against the bearing arrangement (22) via a spring assembly arranged on the pressure side.

6. Hydraulic rotary leadthrough according to one of the preceding claims,
**characterized**
**in that** the rotary leadthrough (1) is a constituent part of a working unit having working elements which are adjustable relative to one another.

7. Hydraulic rotary leadthrough according to Claim 6,
**characterized**
**in that** as working unit there is provided a belt pulley drive (6) of which the working elements which can be adjusted relative to one another are formed by belt pulleys (2, 3) and of which one of the belt pulleys (2, 3), which are hydraulically axially adjustable relative to one another, forms the receiving housing (12) for the rotary leadthrough (1).

8. Hydraulic rotary leadthrough according to Claim 6,
**characterized**
**in that** the working unit is formed by a fan wheel having a central hub (42), a rotary leadthrough (48) received centrally in the hub (42) and, radial to the hub (42), fan blades which can be adjusted in their setting angle, in which working unit there are provided as working elements which are adjustable relative to one another the hub housing (51) as receptacle for a hydraulically axially charged setting piston (44), and the setting piston (44) operatively connected to the fan blades.

9. Hydraulic rotary leadthrough according to Claim 8,
**characterized**
**in that** the hub housing (51) is configured as a cup-shaped receptacle for the setting piston (44), which has sealing arrangements (52) with respect to the rotary neck (49) and with respect to the cup wall (45).

10. Hydraulic rotary leadthrough according to Claim 6,
**characterized**
**in that** the rotary leadthrough (1) is provided adjoining a rotatably driven working element, in particular a rotatable working tool.

## Revendications

1. Passage tournant hydraulique, comprenant un axe de rotation central (5), une gorge tournante (17, 59) guidée en rotation dans un boîtier de réception (12, 51) de manière centrée par l'intermédiaire d'un ensemble de palier (22), un conduit de refoulement (18, 59) s'étendant dans la gorge tournante (17, 49) qui, en partant d'un raccord de pression (20) sur une face frontale du boîtier (12, 51), débouche sur un côté refoulement opposé du passage tournant (1, 48), et un ensemble d'étanchéité (26, 54) situé axialement entre le côté refoulement du passage tournant (1, 48) et l'ensemble de palier (22), entourant la gorge tournante (17, 49) et délimitant par rapport à la gorge tournante (17, 49) un volume collecteur de fuite (27, 55) qui est raccordé à un conduit collecteur (19, 58) qui s'étend dans la gorge tournante (17, 49), en partant du volume collecteur (27, 55) jusqu'à la face frontale du boîtier (12, 51) qui est opposée au côté refoulement, dans lequel le conduit de refoulement (18, 59) et le conduit collecteur (19, 58) sont formés dans la gorge tournante (17, 49) par des alésages dans la gorge tournante (17, 49) en s'étendant en parallèle,
**caractérisé en ce que** l'ensemble de palier (22) et l'ensemble d'étanchéité (26) sont reçus dans des douilles (24, 25) qui s'appuient axialement les unes sur les autres.

2. Passage tournant hydraulique selon la revendication 1, **caractérisé en ce que** les douilles (24, 25) sont reliées pour former une unité en se chevauchant axialement les unes les autres.

3. Passage tournant hydraulique selon la revendication 1 ou 2, **caractérisé en ce que** les douilles (24, 25) sont disposées dans le boîtier de réception (12) du passage tournant (1), par l'intermédiaire de joints d'étanchéité périphériques (31) .

4. Passage tournant hydraulique selon l'une quelconque des revendications précédentes, **caractérisé en ce que** le passage tournant (1) est réalisé sous forme de cartouche d'insertion.

5. Passage tournant hydraulique selon la revendication 3 ou 4, **caractérisé en ce que** l'ensemble d'étanchéité (26) est serré contre l'ensemble de palier (22) par l'intermédiaire d'un groupe de ressorts disposé côté refoulement.

6. Passage tournant hydraulique selon l'une quelconque des revendications précédentes, **caractérisé en ce que** le passage tournant (1) fait partie d'une unité de travail comprenant des éléments de travail réglables les uns par rapport aux autres.

7. Passage tournant hydraulique selon la revendication 6, **caractérisé en ce qu'**un entraînement par poulie à courroie (6) est prévu en tant qu'unité de travail, dont les éléments de travail réglables mutuellement sont formés par des poulies à courroie (2, 3) et dont l'une des poulies à courroie (2, 3), axialement mutuellement réglables hydrauliquement, forme le logement de réception (12) pour le passage tournant (1).

8. Passage tournant hydraulique selon la revendication 6, **caractérisé en ce que** l'unité de travail est formée par une hélice de ventilateur dotée d'un moyeu central (42), un passage tournant (48) reçu de manière centrale dans le moyeu (42), et des ailettes de ventilateur radiales par rapport au moyeu (42) et réglables au niveau de leur angle d'attaque, dans lequel le boîtier de moyeu (51) comme logement pour un piston de réglage (44) à alimentation axiale hydraulique et le piston de réglage (44) en relation active avec les ailettes de ventilateur sont prévus comme éléments de travail réglables mutuellement.

9. Passage tournant hydraulique selon la revendication 8, **caractérisé en ce que** le boîtier de moyeu (51) est réalisé sous la forme d'un logement en forme de cuvette pour le piston de réglage (44) qui présente des ensembles d'étanchéité (52) par rapport à la gorge tournante (49) et à la paroi de cuvette (45).

10. Passage tournant hydraulique selon la revendication 6, **caractérisé en ce que** le passage tournant (1) est prévu après un élément de travail entraîné en rotation, en particulier un outil de travail rotatif.
